# EUROPEAN PATENT SPECIFICATION

(11) **EP 1 479 531 B1**
(45) Date of publication and mention of the grant of the patent: **14.03.2018**
(21) Application number: 04075916.9
(22) Date of filing: 22.03.2004
(51) Int. Cl.: B44D 3/10, B01D 29/11

(54) **Paint strainer and method for the manufacture thereof**
Filtereinsatz für Farbenflüssigkeiten und Verfahren zur Herstellung
Tamis pour peinture et procédé de fabrication

(30) Priority: 20.03.2003 NL 1022980
(43) Date of publication of application: 24.11.2004
(73) Proprietor: E.M.M. International B.V., 8028 SB Zwolle (NL)
(72) Inventor: Siero, Paul Peter, 3818 AH Amersfoort (NL); Broers, Menno Arjan, 3818 LD Amersfoort (NL)
(74) Representative: V.O.

(56) References cited:
- EP-A- 0 988 881
- WO-A-97/33674
- CA-A- 2 386 493
- DE-A- 2 109 618
- DE-U- 20 206 298
- FR-A- 2 153 534
- GB-A- 755 614
- GB-A- 1 591 035
- GB-A- 2 253 838
- US-A- 3 741 397
- US-A- 4 025 435
- US-A- 4 158 631
- US-A- 4 294 701
- US-A- 4 559 140
- US-A- 4 622 146

## Description

The invention relates to a paint strainer. The invention particularly relates to a paint strainer which can be used for, for instance, straining lacquer such as car lacquer.

Existing paint strainers are usually manufactured from a paper or cardboard sleeve, provided near a bottom end with a cotton insert part which forms a strainer surface. This insert part is glued on the inside against the paper and is supported by paper strips extending over the strainer surface. In this manner, the strainer surface is effectively divided into a number of strainer surfaces, so that the total strainer surface is reduced. Such paint strainers are intended for single use. Such a paint strainer has the drawback that it is manufactured from at least two different materials. In addition, the paper and the cotton insert part have the drawback that they can result in dust particles in the paint to be strained or the strained paint, just like the paper. This is disadvantageous for the result to be achieved.

DE 202 06 298 and FR2 153 534 describe a disposable paint strainer, wherein the paint strainer is manufactured by punching a film-shaped material into a shape for forming the wall of the paint strainer into a cone shape. The cone is formed by overlapping two longitudinal edges of the wall, which are welded together into a flat weld extending substantially parallel to the wall of the cone. A paint strainer forms the tip of the cone.

Further, paint strainers are known which serve for repeated use. These are built up from a relatively stiff, boxlike plastic part with an open top side and bottom side. Against the bottom side, a strainer part has been glued. A drawback of these paint strainers is that the strainer part silts up relatively rapidly, because the strainer part extends substantially in a horizontal plane. In addition, these paint strainers are relatively expensive and, despite the fact that they can be stacked one into the other, they require relatively much space for storage, transport and use.

US4622146 discloses a disposable paint strainer having a frusto conical strainer body formed by a flexible wall with adjacent a open lower end of the wall, inside the strainer body, a ring comprising a filter element extending over said opening.

WO9733674 discloses a cylindrical filter with color coding.

GB2253838 discloses a holder with through shaped drainer and a strainer which has a conical body, formed by a wall which above the closed lower end of the body is provided with straining gauze.

US4025435 discloses a paint filtering apparatus having a bowl shaped filter element, for example made of cloth, supported above a paint receptacle by a support and a holder.

It is the object of the invention to provide a paint strainer which is easy to use, is relatively inexpensive and takes up little space in storage and transport and still has a sufficiently large volume during use. For this purpose, a paint strainer according to the invention is characterized by the measures according to claim 1.

In a paint strainer according to the invention, a plastic film wall is used to which a plastic strainer part is fixed. The plastic strainer part is, just like the wall, relatively thin, so that the paint strainer can be folded up to a relatively flat condition, in which it can be stored and transported, taking up a minimum of space. When the paint strainer is unfolded, a volume can be obtained inside the wall, above the strainer part, into which the paint to be strained can be introduced.

In a paint strainer according to the invention, the strainer part can be fixed to a longitudinal edge of the wall, at least of an opening therein. Here, further support means can be dispensed with, so that a maximum strainer surface is kept free for straining. The whole surface of the strainer part is preferably provided with open perforations, clear of wall material, with the exception of the connection with the wall along the longitudinal edge of the wall. Because the whole paint strainer is manufactured from plastic, it can be thrown away as a whole. The plastics will not exhibit fluff formation, thread formation or the like, so that pollution of the paint to be strained or the strained paint is simply prevented.

Preferably, in a paint strainer according to the invention, heat-sealable or high frequency or ultrasonically weldable plastics are used, so that the strainer part is attached to the wall by one welded joint. This offers the advantage that heat sealing is a relatively clean technique, in contrast to glue. Thus, pollution of the wall, the strainer part or the environment in production and/or use is prevented in a simple manner. In addition, a heat seal connection is insensitive to the paint to be strained and solvents to be used. A further advantage is that such a technique can be used simply, rapidly, controllably and relatively inexpensively.

The paint strainer preferably has a conical shape or a shape otherwise tapering in a point, with the strainer part forming at least substantially the top of the conical shape, at least the part comprising the point. In this manner, a particularly advantageous straining action is obtained. Here, the top may be either pointed or rounded.

In the wall of the paint strainer, preferably, suspension means are provided by means of which the paint strainer can be suspended, in operative condition, in or above, for instance, a mixing cup, inlet funnel or the like.

The invention further relates to a method for manufacturing a paint strainer, in particular a paint strainer according to the invention. For this purpose, a method according to the invention is characterized by the measures according to claim 10.

With such a method, in a rapid, simple and relatively inexpensive manner, a paint strainer can be manufactured which is suitable for single use, requires relatively little material, takes up relatively little space in storage and transport and prevents pollution of the paint strained with it by material of the paint strainer during use.

Preferably, heat-sealing technique or high-frequency welding technique is used for fixing the strainer part in or to the wall.

In a method according to the invention, preferably, the starting material is a sheet of film material, which is or has been provided with an opening. In the opening, the strainer part is then provided, preferably by heat-sealing, high frequency or ultrasonic welding of the edges thereof at the edges of the opening. Preferably, the starting material is a flat film sheet, which is folded after the strainer part has been provided, such that at least the strainer part is also folded. Thus, the film sheet may, for instance, be folded over a center line or a diagonal, such that the strainer part is approximately folded double. Subsequently, a further sealing seam can then be provided, at an angle deviating from 180°, over the folded strainer part and film sheet, for interconnecting the two layers thereof. Then, when the latter sealing seam is cut, two paint strainers have been obtained.

By folding the film sheet double along a center line as folding line, starting from, for instance, a rectangular, in particular a square sheet, and providing a sealing seam approximately perpendicular to the folding line, approximately in the middle, while the strainer part has been placed approximately in the middle of this sheet, two paint strainers are obtained. Each paint strainer then has, in flat condition, in side elevational view, an approximately rectangular or in particular square shape, with an angle being formed by the strainer part. When the paint strainer is unfolded, a substantially conical part is obtained with a conical straining part formed by the strainer part, while, on the side facing away from the strainer part, two ears have been obtained in which, for instance, openings can be provided for forming suspension means. Of course, other means may also be used for this, for instance integrally formed rings, hook elements, clamping means or the like. Of course, differently shaped film sheets and/or strainer parts may also be used. Also, sheets may be folded and/or sealed multiple times for obtaining a different number of and/or differently formed strainers.

When a paint strainer is manufactured in a similar manner, but the sheet is folded diagonally, then a paint strainer is obtained which is approximately conical as a whole, with a conical straining part. Thus, of course, in the same or similar manner, paint strainers may be manufactured from sheets with a different starting shape, while, in addition, also, for instance, multiple sealing seams may be provided over a sheet folded one time or multiple times, for obtaining multiple paint strainers from a sheet.

In an alternative embodiment, the paint strainers may be assembled from two parts, preferably two equally shaped parts which can be connected to each other for forming the paint strainer. Here, each part is built up from a wall part and a strainer part, interconnected via an edge of the wall part and strainer part, respectively. These are then laid on top of each other, such that the two wall parts and the two strainer parts lie on top of each other, after which at least the strainer parts are interconnected along a free longitudinal edge. Here, preferably, use is made of sealing technique, in particular heat-sealing technique. Thus, a paint strainer is obtained which is normally flat, that is, has a thickness equal to approximately two times the thickness of the film from which the wall part and the strainer part are manufactured, but can be unfolded for forming a bowl-shaped paint strainer with a straining bottom, at least top.

It is particularly advantageous when, from one web, parts are punched away in the middle part in longitudinal direction for forming recesses and the lower longitudinal edge of the wall parts, where, then, a wall from perforated material, in particular gauze material for the formation of the strainer parts, is provided, in particular in the form of a straight band. Then, two of such film webs can fittingly be laid on top of each other, such that these bands of the two film webs lie on top of each other, just like the openings. Then, the two film webs, at least bands, can be interconnected, for instance by heat sealing, so that at least the final strainer parts are formed, as well as a connection between the wall parts. At the same time or subsequently, the paint strainers can be separated from each other by cutting or punching operations. In this manner, a series of paint strainers is manufactured in a particularly economical manner, with relatively little waste.

It is preferred that the or each sealing seam is folded inwards, to inside the wall and/or the strainer part. This makes the appearance more pleasant and still further improves the straining action.

With use of a non-woven straining part, the chance of threads and the like in the paint is still further reduced and the straining action can be particularly accurately determined.

The invention further relates to a series of paint strainers, with the paint strainers differing in color and strainer part. Here, the colors may be chosen such that the color indicates the mesh size of the strainer part and/or the intended use of the paint strainer, for instance depending on the paint to be strained.

The invention further relates to a holder and a support for use with a paint strainer according to the present invention.

In this specification, paint is also understood to mean at least lacquer such as car lacquer, primer paint, primer lacquer, primers and the like.

In order to explain the invention, embodiments of a paint strainer and a method according to the invention will be described in more detail with reference to the drawing, in which:
Fig. 1 shows, in side elevational view, a first embodiment of a paint strainer according to the invention, in flat condition;
Fig. 2 shows a paint strainer according to Fig. 1, in unfolded condition;
Fig. 3 shows, in side elevational view, a second embodiment of a paint strainer according to the invention, in flat condition;
Figs. 4-6 diagrammatically show, in steps, a method according to the invention;
Fig. 7 shows an alternative film sheet with strainer part;
Fig. 8 shows, in a view similar to Fig. 4, a further alternative embodiment of a paint strainer according to the invention;
Fig. 9 diagrammatically shows a method for the manufacture of a paint strainer according to the invention; in particular according to Fig. 8;
Fig. 10 shows, in perspective view, a holder for use with a paint strainer according to the invention;
Fig. 11 shows, in perspective view, a support for use with a paint strainer according to the invention;
Fig. 12 shows a support according to the invention, with a holder according to the invention therein which supports a paint strainer according to the invention, and a paint spray gun with gravity feed cup; and
Fig. 13 shows a support according to Fig. 11, with a cup for a suction cup spray gun placed therein.

In this description, same or corresponding parts have same or corresponding reference numerals.

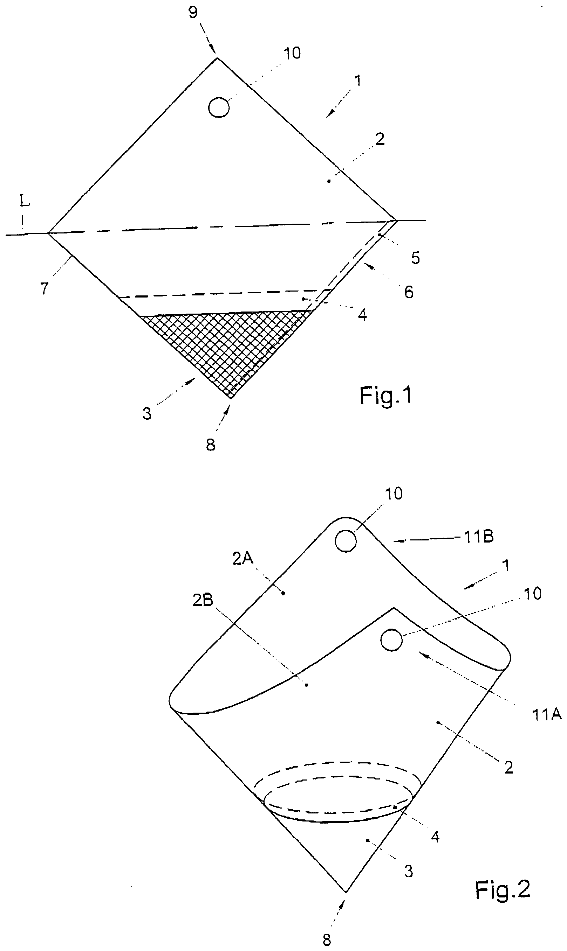

Fig. 1 diagrammatically shows, in side elevational view, a paint strainer 1 according to the invention, in flat condition. This paint strainer comprises a film-shaped wall 2 and a strainer part 3 which has been fixed to the wall 2 by means of sealing technique, thereby forming a sealing seam 4. In addition, a second sealing seam 5 extends along a side 6 of the wall 2 and the strainer part 3, which second sealing seam 5 will be returned to in more detail. In the flat condition, as shown in Fig. 1, the wall 2 comprises two wall parts 2A, 2B lying on top of each other, interconnected by a folding line 7 and the second sealing seam 5. The folding line 7 also extends over the strainer part 3 and opens into the end of the second sealing seam 5. In side elevational view, the strainer part 3 has a substantially triangular shape which opens into the point 8. In side elevational view, in flat condition, the whole paint strainer has a substantially rectangular, in particular square shape and is provided, near the top side 9 located opposite the point 8, with a suspension opening 10, which extends through both wall parts of the wall 2.

The wall 2 and the strainer part 3 are both manufactured from plastic, in particular heat-sealable, high frequency or ultrasonically weldable plastics. The wall is manufactured from film material, for instance polyethylene, polypropylene, PET, or the like, while the strainer part 3 is preferably manufactured from a similar plastic or, for instance, polyamide such as nylon 6, nylon 6.6, nylon 11 or the like. More generally, the strainer part 3 is preferably manufactured from gauze-shaped, strainer-shaped material, such as non-woven plastic or woven or knitted plastic cloth. The plastics used are preferably recyclable together and resistant to paint, such as lacquers, solvents and the like.

Fig. 2 diagrammatically shows a strainer 1 according to Fig. 1, in unfolded, opened condition. Here, the strainer part 3 has a substantially conical shape, whose top is formed by the point 8. The two wall parts 2A, 2B have been slightly moved apart, thereby forming a likewise substantially (frusto)conical wall 2 with two ears 11A, 11B. The ears 11A, 11B are formed by the wall parts 2A, 2B above an imaginary line L drawn through the ends of the folding line 7 and second sealing seam 5 remote from the point 8. By means of the two openings 10, the strainer part 1, in the shape shown in Fig. 2, can be suspended in means known per se, such as a funnel above a filler cup or mixing cup or the like.

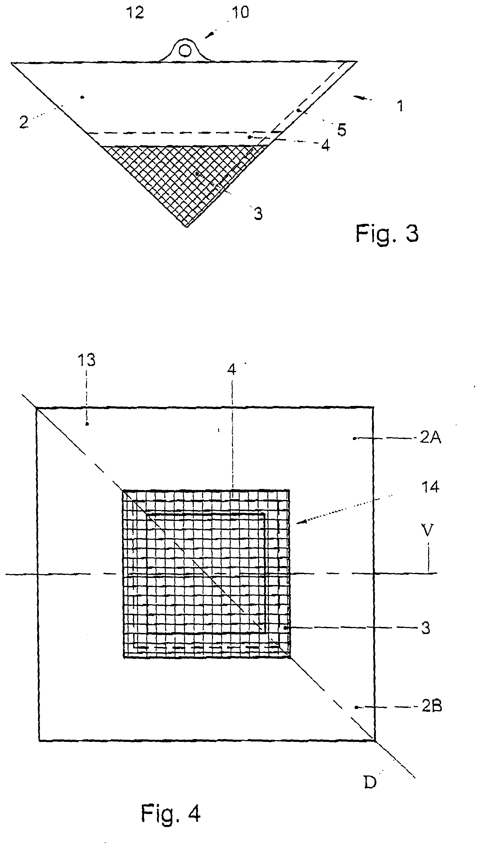

As shown in Fig. 2, the strainer part 3 has a free straining outer surface, where no other support means are provided but the sealing seam 4. Of course, such support means are possible, for instance by maintaining or providing a strip or cross of plastic in the opening 14 (Fig. 4).

Fig. 3 shows an alternative embodiment of a paint strainer 1 according to the invention, again with a film-shaped plastic wall 2 and a strainer part 3. In this embodiment, the paint strainer 1 has a substantially triangular shape in flat condition, just like the strainer part 3. Again, a first sealing seam 4 and a second sealing seam 5 are provided for forming the paint strainer 1. Such an embodiment requires relatively little material for a large volume of paint which can be received therein. In this embodiment, suspension means 10 are provided in the form of a lip with opening, which lip 12 may, for instance, be sealed to the wall 2 or may be integrally formed therewith.

Figs. 4-6 diagrammatically show, in a number of steps, a method according to the invention, for forming a paint strainer 1 according to the invention.

Fig. 4 shows a flat film sheet 13, provided with an opening 14, which can, for instance, be provided by punching, cutting or the like. A strainer part 3 has been placed, extending over the opening 14, on a the film-shaped sheet 13 and has been fixed thereon, in particular by means of a sealing seam 4, diagrammatically shown in Fig. 4 by a dotted line. In the embodiment shown, the opening 14 and the strainer part 3 both have a square design, just like the sheet 13. However, these may, of course, also have different shapes, for instance round or diamond-shaped.

After the strainer part 3 has been placed, the sheet 13 is folded double, together with the strainer part 3, along the line V, which will eventually form the folding line 7. Here, the folding is preferably such that the strainer part 3 is enclosed inside the sheet 13. The folding line V forms, for instance, a center line of the square sheet 13, but may also be positioned differently.

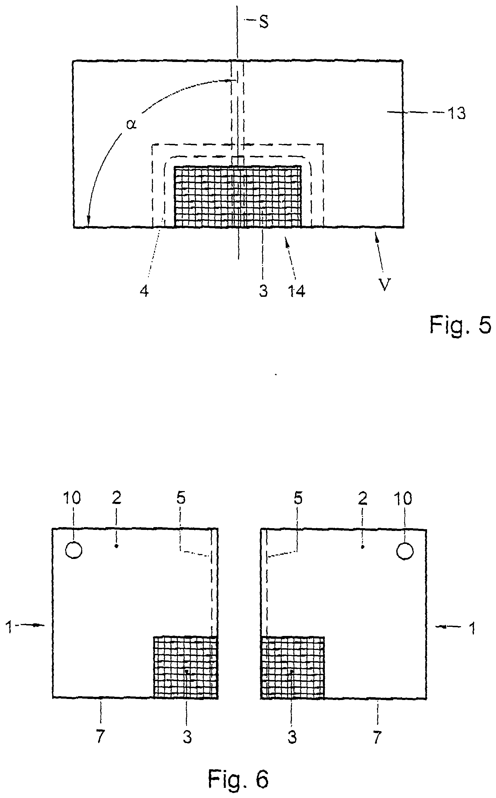

Fig. 5 shows the film sheet folded double in side elevational view, with the strainer part 3 folded double therein. Then, a sealing seam S is provided which includes an angle with the folding line V and crosses both the film sheet 13 folded double and the strainer part 3. The angle α which the sealing seam S includes with the folding line V is, for instance, approximately 90° in the exemplary embodiment shown. However, of course, different angles may also be used.

When the sheet 13 is folded double along the folding line V, the parts 2A, 2B located on both sides of the folding line are laid on top of each other, which parts are interconnected by the sealing seam S, thereby forming a fluid-tight sealing seam, diagrammatically shown as dotted lines on both sides of the chain-dotted line S.

Following or during the formation of the sealing seam S, a cut is provided approximately in the middle through the sealing seam S, such that two paint strainers 1 are formed, with the sealing seam S being divided into two second sealing seams 5. Fig. 6 shows the two thus formed paint strainers 1 cut loose, in flat condition. In each paint strainer 1, an opening 10 has been punched through the walls 2.

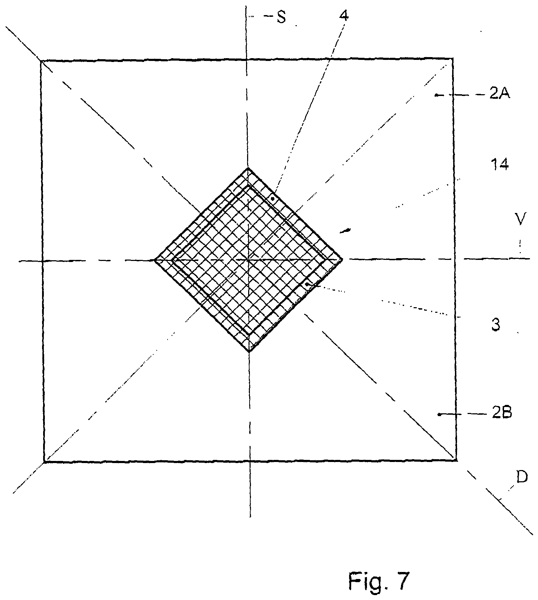

In the method shown in Figs. 4-6, the strainer part 3 has a square design and has been placed in the middle of the sheet 13, with the angular points of the strainer part on the diagonals of the sheet. In this manner, a third embodiment of a paint strainer 1 according to the invention has been obtained, as shown in Fig. 6. When a square strainer part 3 is rotated over 45° relative to the position shown in Fig. 4, such that a diagonal of the strainer part 3 lies on the folding line V, at least parallel thereto, as shown in Fig. 7, then, by the steps as shown in Figs. 4-6, a paint strainer 1 is obtained comparable to the one as shown in Fig. 1. When, in a method according to Figs. 4-6, the sheet 13 is folded along the diagonal D instead of along the folding line V, then, after steps comparable to those as described with reference to Figs. 5 and 6, a paint strainer according to Fig. 3 is obtained. In this manner, of course, many variations are possible within a method according to the invention.

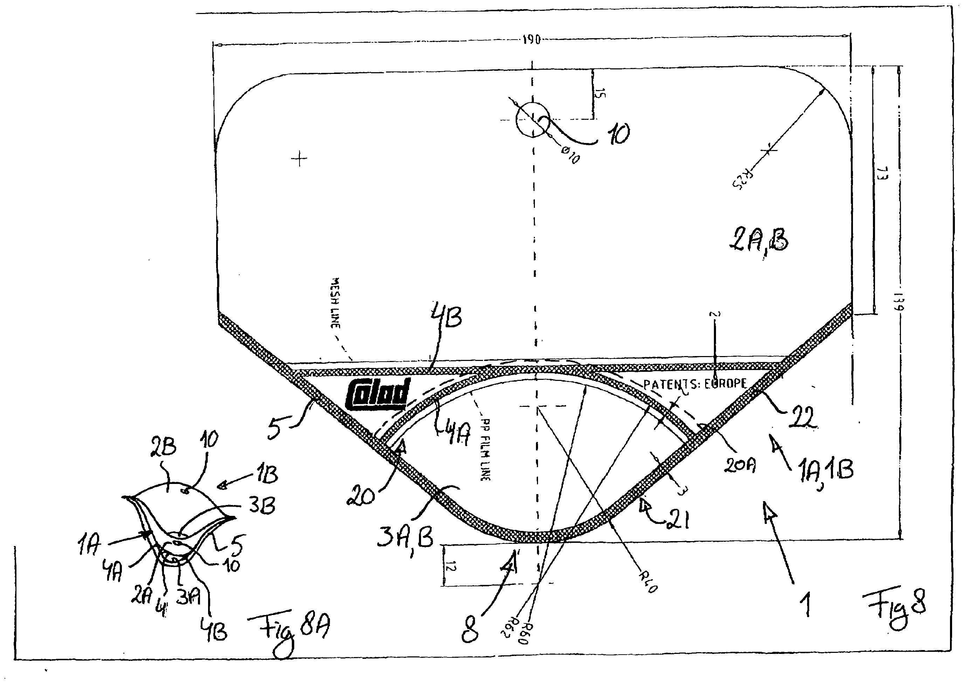

Fig. 8 diagrammatically shows, in side elevational view, a paint strainer 1 according to the invention, in flat condition, in a further alternative embodiment. Here as well, a film-shaped wall 2 and a strainer part 3 are provided, interconnected by means of sealing technique. In this embodiment, the paint strainer 1 is built up from two equally shaped, in particular identical parts each comprising a wall part 2A, 2B and a strainer part 3A, 3B. In this embodiment, each strainer part 3A, 3B is connected with the respective wall part 2A, 2B by a bent sealing seam 4A and a straight sealing seam 4B. The straight sealing seam 4B is the result of a method used for the formation, as will be described in more detail. In principle, this can be omitted if each strainer part 3A, 3B has a longitudinal edge 20 extending parallel to the bent sealing seam 4A. In this embodiment of the paint strainer 1, a second sealing seam 5 has been provided, by means of which the two parts 1A, 1B of the paint strainer 1 are interconnected. This sealing seam 5 is substantially V-shaped with a bent top 8, so that it runs smoothly. This second sealing seam 5 interconnects the two strainer parts 3A, 3B along a free longitudinal edge 21 and, on both sides thereof, the two wall parts 2A, 2B along an inclined longitudinal edge part 22. Fig. 8A diagrammatically shows a paint strainer 1 according to Fig. 8, in unfolded condition, with the two halves 1A, 1B being clearly visible, interconnected by the second sealing seam 5. In the manner described hereinabove, in each wall part 2A, 2B, an opening 10 has been provided for suspending the paint strainer 1 during use.

It will be clear that, during use, the volume of paint which can be received in the paint strainer is determined by the volume enclosed by the sealing seam 5. Preferably, the sealing seam parts 22 of the second sealing seam 5 end above the highest part of the strainer part 3, in particular right above the straight sealing seam 4B.

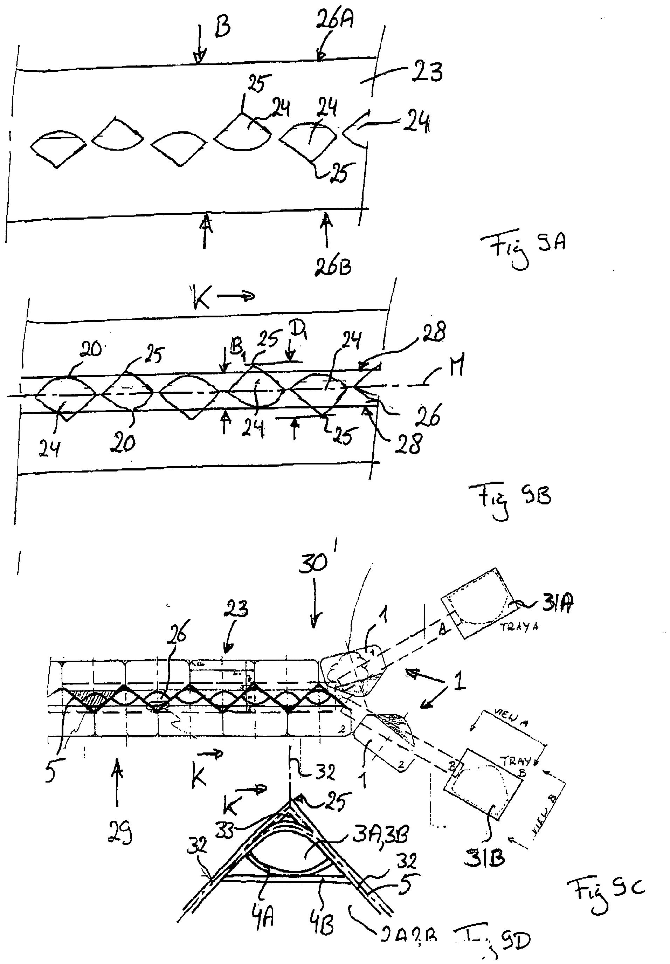

Figs. 9A-C show three stages of the manufacture of a paint strainer 1 according to Fig. 8.

Fig. 9A diagrammatically shows a web 23 of film from which the walls 2 of the paint strainers 1 are manufactured. This web 23 has a width B. Near the middle of the web 23, openings 24 have been punched out having surfaces in the shape of a sector of a circle, having points 25 alternately oriented towards the first or second longitudinal edge 26A, 26B. In the exemplary embodiment shown, the bent longitudinal edges 20 are located such that they intersect a center line M of the web 23. Depending on the size of the strainer part 3, this can be adjusted, by moving the bent longitudinal edge 20 relative to the opposite longitudinal edge 26A, B.

In Fig. 9B, on the web 23, a band 26 of plastic is provided, formed from the material from which the strainer part 3 is to be formed, at least the parts 3A, 3B therefrom. In the embodiment shown, the band 26 has a width B measured perpendicular to the longitudinal direction K of the web 23 and band 26, which is slightly smaller than the distance D₁ between the points 25 of two adjacent openings 24. The band 26 overlaps the openings 19 at least such that a strainer part 3A, 3B of the desired dimensions and shape can be punched from it. The band 26 is fixed, in particular sealed, more in particular fixed by heat-sealing, on the web 23 in the longitudinal direction K by two opposite longitudinal edges 28, which longitudinal edges 28 form the straight seals 4A, 4B in the paint strainer 1. In addition, the first sealing seams 4A are provided along the bent boundaries 20A of the openings 24, such that the band 26 is fixedly connected along them with the web 23.

Fig. 9C shows, in top plan view, a follow-on stage for the manufacture of the paint strainers 1, in which two webs 23 with the bands 26 on top of them are fittingly laid on top of each other, such that the openings 24 are right above each other. In the exemplary embodiments shown, the bands 26 are laid against each other, but of course they may also be located on the outside or be facing the same side. The webs 23 with bands 26 thus placed on top of each other are fed through in the direction K, with the sealing seams 5 being formed in a first stage 29, for instance by suitable sealing rollers, sealing dies or the like. Fig. 9C shows the sealing seam 5 as a sinusoidal, wavy, slightly thickened line.

In Fig. 9C, after the sealing seam 5 has been provided, in a second stage 30, each time, one paint strainer 1 is cut loose alternately with respect to the center line M, by means of a cutting operation, punching or the like, and discharged to a tray A, 31A and a second tray B, 31B. The flat paint strainers 1 are stacked in the trays 31A, B to a desired height, for instance 75 pieces, after which they are stored in a package for shipping and use.

Fig. 9D diagrammatically shows a middle part of the webs 23 with the bands 26, slightly enlarged, in which dash-dotted lines 32 indicate how the cutting lines extend approximately in the middle over the seals 5, and from the point 25 of the opening 9, transversely to the longitudinal direction K, for cutting loose the paint strainers and preserving the seals. The triangle 33 included by the cutting lines 32 is discharged as waste.

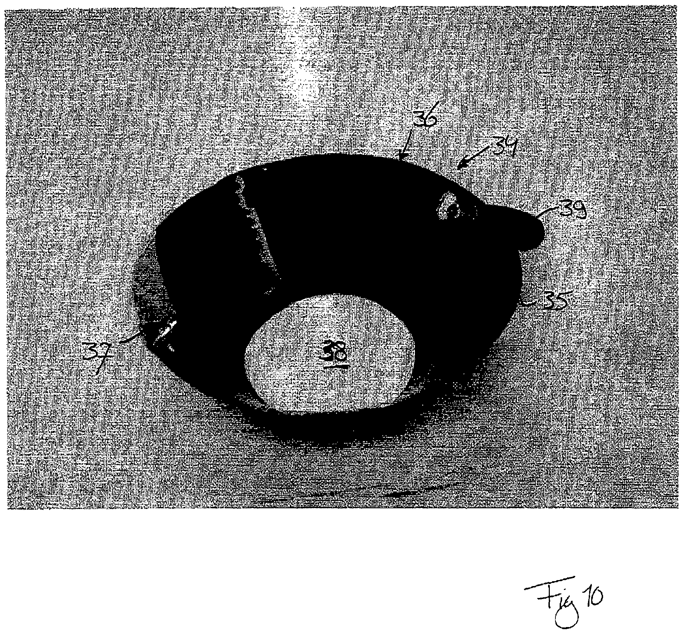

Fig. 10 shows, in perspective view, a holder 34 for a paint strainer 1 according to the invention. This holder 34 has a frustoconical shape of which both the wide and the narrow end 38 are open. The wall 35 of the holder 34 is, for instance, manufactured from plate material. Near the upper longitudinal edge 36, diametrically opposite each other, two pins 37 are provided which extend inwards, approximately perpendicular to the inner surface of the wall 35. From these pins, a paint strainer 1 according to the invention can be suspended by means of the openings 10. The wall 2 of the paint strainer 1 will then be able to receive support from the inside of the wall 35 of the support, while the strainer part reaches wholly or partly through the lower opening 38 of the holder 34. A handle 39 is provided on the outside of the holder 34, so that it can easily be manipulated.

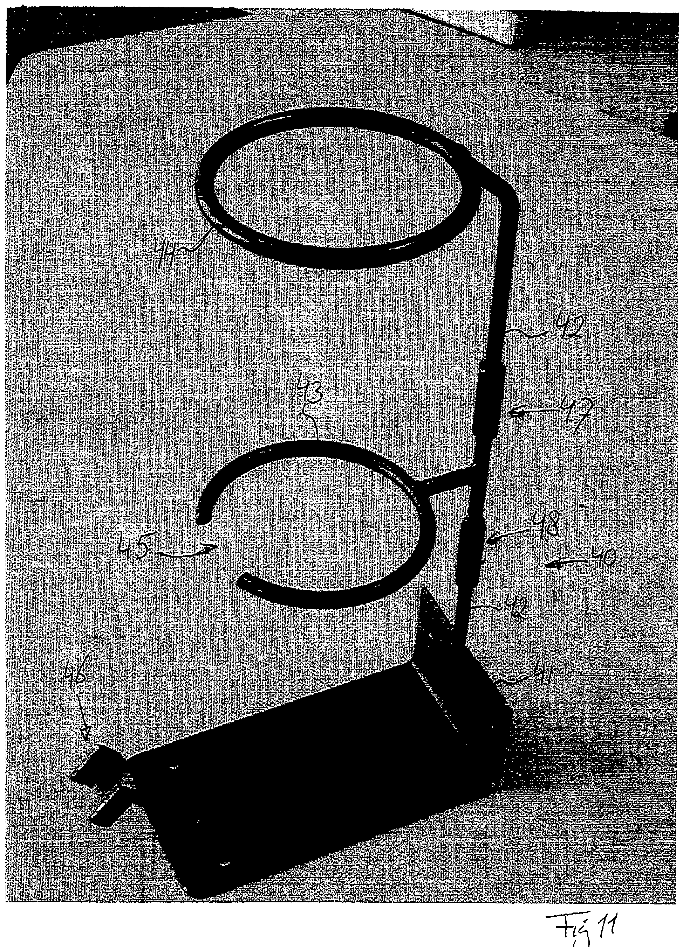

Fig. 11 shows, in perspective view, a support 40 for use with a holder 34, at least paint strainers 1 according to the invention, although, of course, different holders and/or paint strainers may also be used therewith. This support 40 comprises a foot 41 and a support 42 extending upwards therefrom, to which support 42 a first support ring 43 and, thereabove, a second support ring 44 are attached, which extend approximately right above each other. The upper support ring 44 may have a wholly closed circumference, while the lower support ring 43 provides an opening 45 on one side. On the foot 41, below the opening 45, a support bracket 46 is provided, which is slightly inclined with respect to the foot and the support rings 44, 45. Setting means 47, 48 may be provided for setting the height of the first and second support ring 43, 44 above the foot 41.

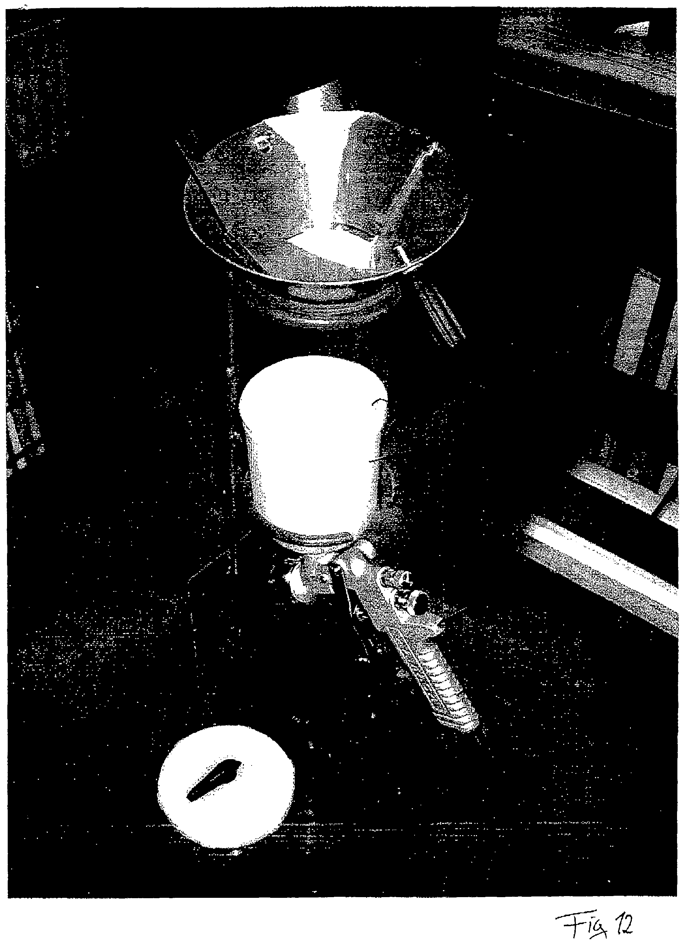

As Fig. 12 shows, a paint spray gun 50 with a gravity feed cup 51 can be placed in the support 40 by sliding the gravity feed cup 51 into the first support ring 43 and having the handle 52 of the paint spray gun rest in the support element 46. A holder 34 with a paint strainer 1 therein can be suspended in the top side of the upper, second support ring 44, with the strainer part 3 above the opening 53 of the cup 51. Paint can then flow from the paint strainer 1 through the strainer part 3 into the cup 51.

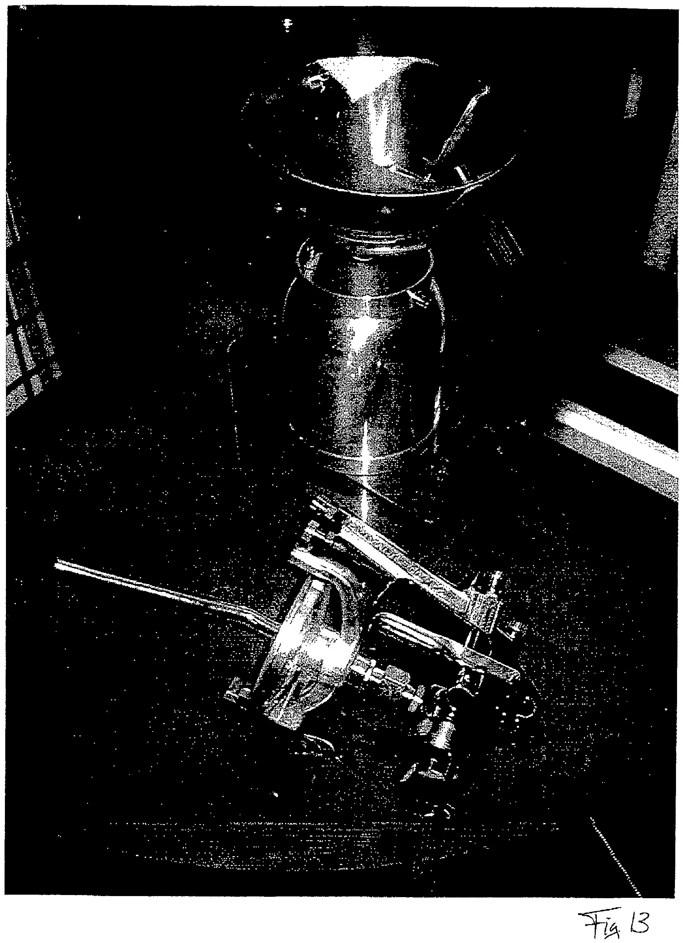

Fig. 13 shows the support 40 according to the invention, with use of a suction cup 54 of a suction cup spray gun 55. This cup 54 has been placed on the foot 41 and the holder 34 with the paint strainer 1 has been suspended in the lower support ring 43, with the strainer part 3 above the opening 55 of the cup 54. Again, paint can simply flow through the paint strainer 1, in particular the strainer part 3, into the cup 54. In this embodiment, the upper support ring 44 has been removed. However, it can, of course, also remain in place. The setting means 47, 48 may also be designed as coupling means, such that the lower support ring 43 can easily be removed and the upper support ring 44 can be attached directly onto the lower part of the support 42 on the foot 41 by means of the coupling means 47.

It is preferred that a series of paint strainers is manufactured with differently colored walls and/or strainer parts, with the color being chosen on the basis of the strainer part, in particular its mesh size. A series of paint strainers 1 is then obtained of which the mesh size and thus the straining action can be told from the color, so that the use is considerably simplified and mistakes are prevented. It can also be indicated by means of such a color coding for what materials a respective paint strainer can be used. Of course, a different type of coding may also be used for this.

The thickness of the film used is preferably between 40 and 400µm, depending on, for instance, intended use, type of plastic, content, and the like. The mesh or pore size of the strainer part is preferably between 70 and 500 µm.

It will be clear that the embodiments shown are only shown and described as examples. Many variations of these are possible within the scope of the invention set forth in the claims.

For instance, from a sheet-shaped film material, with a method according to the invention, more than two strainers may be formed from one sheet of film material, for instance by providing, in the condition shown in Fig. 5, two more sealing seams in addition to sealing seam S, which sealing seams extend from the intersection of the folding line V and the sealing seam S, along the diagonals of the squares located on both sides of the sealing seam S. When these sealing seams are also cut, then four paint strainers 1 are obtained which are slightly the shape of a French fries bag. For a paint strainer 1 according to the invention, of course, many different materials may be used, preferably heat-sealable materials. A paint strainer 1 according to the invention is preferably disposable after use, is inexpensive, simple, stackable and storable in flat condition, and is thus particularly advantageous and simple to manufacture and use.

## Claims

1. A paint strainer (1), provided with a film-shaped wall (2) and a strainer part (3), wherein film-shaped wall (2) and strainer part (3) are manufactured from plastic, wherein the film-shaped wall (2) and the strainer part (3) are manufactured from a weldable plastic, wherein the film-shaped wall (2) has at least two folding seams and/or sealing seams (4) located opposite each other, such that said wall (2) has two wall parts (2A, 2B) which are flat in a storage position and the film-shaped wall (2) is slightly frustoconical in unfolded condition, wherein the strainer part (3) forms the top.

2. A paint strainer (1) according to claim 1, wherein the strainer part (3) is substantially cone-shaped in unfolded condition.

3. A paint strainer (1) according to claim 1, wherein the weldable plastic is a heat-sealable, high frequency or ultrasonically weldable plastic.

4. A paint strainer (1) according to any one of the preceding claims, wherein the film-shaped wall (2) is closed upon itself and has an open top side and bottom side, wherein the strainer part (3) has been fixed in said bottom side.

5. A paint strainer (1) according to any one of the preceding claims, wherein the film-shaped wall (2) is provided, at a distance from the strainer part (3), with means for suspension of the paint strainer (1).

6. A paint strainer (1) according to any one of the preceding claims, wherein the strainer part (3) extends from a bottom edge of the wall (2) in the direction of a top, wherein the whole surface of the strainer part (3) is provided with open pores, wherein the wall (2) does not extend into or onto the strainer part (3).

7. A paint strainer (1) according to any one of the preceding claims, wherein the wall (2) is manufactured from PP, PE, PET or PA and the strainer part (3) is manufactured from PP, PE, PET or PA, wherein preferably the wall (2) is manufactured from PP and the strainer part (3) is manufactured from PA.

8. A paint strainer (1) according to any one of the preceding claims, wherein the paint strainer (1) is built up from two parts which are attached against each other along two longitudinal edge parts (22), wherein each part comprises a wall part (2A, 2B) and a strainer part (3), wherein preferably said parts are equally shaped.

9. A paint strainer (1) according to any one of the preceding claims, wherein the paint strainer (3) is, in operative condition, at least partly conical, in particular cone-shaped, with a rounded top formed by the strainer part (3).

10. A method for manufacturing a paint strainer (1) according to any one of claims 1 - 9, wherein the paint strainer (1) is at least substantially built up from a film-shaped wall (2) and a strainer part (3), wherein both said film-shaped wall (2) and said strainer part (3) are manufactured from plastic, wherein paint strainers (1) are manufactured in a continuous process, wherein moving webs of plastic film material and strainer part-forming material are interconnected by sealing and are divided into separate paint strainers (1) by punching.

11. A method according to claim 10, wherein the paint strainer is connected to the film-shaped wall part by sealing.

12. A method according to any one of claims 10 - 11, wherein a film-shaped sheet (13) is provided with an opening (14), wherein a strainer part (3) is fixed in said opening (14), in particular to the longitudinal edges thereof.

13. A method according to claim 12, wherein the film-shaped sheet (13) is folded, such that the strainer part (3) is also folded, wherein a sealing seam (4) is provided over the strainer part (3) and the film part, wherein or after which said strainer part (3) and said film-shaped sheet (13) are cut, over or along said sealing seam (4), for obtaining at least two paint strainers (1).

14. A method according to claim 12 or 13, wherein a substantially rectangular film-shaped sheet (13) is used in which said opening (14) is provided in which the strainer part (13) is fixed, from which at least two substantially equally shaped paint strainers (1) are formed which are substantially square or triangular in folded flat condition.

15. A method according to any one of claims 10 - 12, wherein, on a first web of film for forming first wall parts (2A), a band of perforated plastic is fixed, on or near a longitudinal edge thereof, for forming a first strainer part (3A), wherein, on a second web of film for forming second wall parts (2B), a band of perforated plastic is fixed on or near a longitudinal edge thereof, for forming a second strainer part (3B), wherein the first and second web (23) are laid on top of each other, such that each first wall part (2A) lies on a second wall parts (2B) and each first strainer part (3A) on a second strainer part (3B), after which at least the first and second strainer part (3A, 3B) are fluid-tightly connected with each other along a longitudinal edge, wherein preferably, each time, two first and second wall parts (2A, 2B), respectively, are formed next to each other, on which said band has been fixed, wherein, after the interconnecting of the strainer parts (3A, 3B), a cutting or punching operation is carried out whereby individual paint strainers (1) are cut loose.

16. A method according to any one of claims 10-15, wherein the or each sealing seam (7) is folded to the inside of the paint strainer (1).

17. A method according to any one of claims 10-16, wherein non-woven gauze material is used for the strainer part (1).

18. A series of paint strainers (1) according to any one of claims 1-9, wherein at least two types of paint strainers (3) are included, distinguished by color, wherein each said type has its own strainer size, indicated by the color of said paint strainer (1), at least a color coding thereon.

19. A holder with a paint strainer (1) according to any one of claims 1-9.

20. A support with a paint strainer according to any one of claims 1-9.

## Patentansprüche

1. Filtereinsatz für Farbenflüssigkeiten (1), versehen mit einer folienförmigen Wand (2) und einem Filterteil (3), wobei die folienförmige Wand (2) und das Filterteil (3) aus Kunststoff hergestellt sind, wobei die folienförmige Wand und das Filterteil (3) aus einem schweißbaren Kunststoff hergestellt sind, wobei die folienförmige Wand (2) mindestens zwei einander gegenüber angeordnete Faltnähte und/oder Versiegelungsnähte (4) hat, sodass die Wand (2) zwei Wandteile (2A, 2B) hat, die in einer Faltposition flach sind, und die folienförmige Wand (2) im nicht gefalteten Zustand leicht stumpfkegelig ist, wobei das Filterteil (3) das Oberteil bildet.

2. Filtereinsatz für Farbenflüssigkeiten (1) nach Anspruch 1, wobei das Filterteil (3) im nicht gefalteten Zustand im Wesentlichen kegelförmig ist.

3. Filtereinsatz für Farbenflüssigkeiten (1) nach Anspruch 1, wobei der schweißbare Kunststoff ein mittels Hochfrequenz oder Ultraschall schweißbarer Kunststoff ist.

4. Filtereinsatz für Farbenflüssigkeiten (1) nach einem der vorherigen Ansprüche, wobei die folienförmige Wand (2) in sich selbst geschlossen ist und eine offene Oberseite und Unterseite hat, wobei das Filterteil (3) in der Unterseite befestigt wurde.

5. Filtereinsatz für Farbenflüssigkeiten (1) nach einem der vorhergehenden Ansprüche, wobei die folienförmige Wand (2) in einem Abstand von dem Filterteil (3) mit Mitteln zum Aufhängen des Filtereinsatzes für Farbenflüssigkeiten (1) versehen ist,

6. Filtereinsatz für Farbenflüssigkeiten (1) nach einem der vorhergehenden Ansprüche, wobei das Filterteil (3) von einer Unterkante der Wand (2) in Richtung einer Oberseite verläuft, wobei die ganze Oberfläche des Filterteils (3) mit offenen Poren versehen ist, wobei die Wand (2) sich nicht in oder auf das Filterteil (3) erstreckt.

7. Filtereinsatz für Farbenflüssigkeiten (1) nach einem der vorhergehenden Ansprüche, wobei die Wand (2) aus PP, PE, PET oder PA hergestellt ist und das Filterteil (3) aus PP, PE, PET oder PA hergestellt ist, wobei bevorzugt die Wand (2) aus PP hergestellt ist und das Filterteil (3) aus PA hergestellt ist.

8. Filtereinsatz für Farbenflüssigkeiten (1) nach einem der vorhergehenden Ansprüche, wobei das Filterteil (1) aus zwei Teile aufgebaut ist, die entlang zweier länglicher Kantenteile (22) aneinander befestigt sind, wobei jedes Teil ein Wandteil (2A, 2B) und ein Filterteil (3) umfasst, wobei bevorzugt die Teile gleich geformt sind.

9. Filtereinsatz für Farbenflüssigkeiten (1) nach einem der vorhergehenden Ansprüche, wobei der Filtereinsatz für Farbenflüssigkeiten (3) im Betriebszustand mindestens teilweise kegelförmig ist, insbesondere kegelförmig mit einer gerundeten Oberseite, gebildet von dem Filterteil (3).

10. Verfahren zur Herstellung eines Filtereinsatzes für Farbenflüssigkeiten (1) nach einem der Ansprüche 1 - 9, mindestens im Wesentlichen aus einer folienförmigen Wand (2) und einem Filterteil (3) aufgebaut ist, wobei sowohl die folienförmige Wand (2) als auch das Filterteil (3) aus Kunststoff hergestellt sind, wobei Filtereinsätze für Farbenflüssigkeiten (1) in einem kontinuierlichen Verfahren hergestellt werden, wobei bewegende Netze aus Kunststofffolienmaterial und eine das Filterteil bildenden Material durch Versiegeln miteinander verbunden werden und durch Stanzen in getrennte Filtereinsätze für Farbenflüssigkeiten (1) geteilt werden.

11. Verfahren nach Anspruch 10, wobei der Filtereinsatz für Farbenflüssigkeiten durch Versiegeln mit der folienförmigen Wand verbunden ist.

12. Verfahren nach einem der Ansprüche 10 - 11, wobei ein folienförmiges Blatt (13) mit einer Öffnung (14) versehen wird, wobei ein Filterteil (3) in der Öffnung (14), insbesondere an deren Längskanten, befestigt wird.

13. Verfahren nach Anspruch 12, wobei das folienförmige Blatt (13) so gefaltet wird, dass das Filterteil (3) ebenfalls gefaltet wird, wobei eine Versiegelungsnaht (4) über dem Filterteil (3) und dem Folienteil bereitgestellt wird, wobei oder wonach das Filterteil (3) und das folienförmige Blatt (13) über oder entlang der Versiegelungsnaht (4) geschnitten werden, um mindestens zwei Filtereinsätze für Farbenflüssigkeiten (1) zu erhalten.

14. Verfahren nach Anspruch 12 oder 13, wobei ein im Wesentlichen rechteckiges folienförmiges Blatt (13) verwendet wird, in dem die Öffnung (14) bereitgestellt ist, in der das Filterteil (13) befestigt wird, von dem mindestens zwei im Wesentlichen gleich geformte Filtereinsätze für Farbenflüssigkeiten (1) gebildet werden, die im gefalteten flachen Zustand im Wesentlichen quadratisch oder dreieckig sind.

15. Verfahren nach einem der Ansprüche 10 - 12, wobei auf einem ersten Netz oder einer ersten Folie zum Bilden erster Wandteile (2A) ein Band aus perforiertem Kunststoff befestigt ist, auf oder nahe einer Längskante davon befestigt ist, um ein erstes Filterteil (3A) zu bilden, wobei auf einem ersten Netz oder einer ersten Folie zum Bilden zweiter Wandteile (2B) ein Band aus perforiertem Kunststoff auf oder nahe einer Längskante davon befestigt ist, um ein zweites Filterteil (3B) zu bilden, wobei das erste und zweite Netz (23) aufeinandergelegt sind, sodass jedes erste Wandteil (2A) auf einem zweiten Wandteil (2B) liegt und jedes erste Filterteil (3A) auf einem zweiten Filterteil (3B), wonach mindestens das erste und zweite Filterteil (3A, 3B) flüssigkeitsdicht entlang einer Längskante miteinander verbunden werden, wobei bevorzugt jedes Mal zwei erste und zweite Wandteile (2A, 2B) jeweils nebeneinander gebildet werden, an denen das Band befestigt wurde, wobei nach dem Miteinanderverbinden der Filterteile (3A, 3B) ein Schneide- oder Stanzvorgang ausgeführt wird, wobei einzelne Filtereinsätze für Farbenflüssigkeiten (1) losgeschnitten werden.

16. Verfahren nach einem der Ansprüche 10 - 15, wobei die oder jede Versiegelungsnaht (7) zur Innenseite des Filtereinsatzes für Farbenflüssigkeiten (1) gefaltet ist.

17. Verfahren nach einem der Ansprüche 10 - 16, wobei nicht gewebtes Gazematerial für das Filterteil (1) verwendet wird.

18. Serie von Filtereinsätzen für Farbenflüssigkeiten (1) nach einem der Ansprüche 1 - 9, wobei mindestens zwei Arten von Filtereinsätzen für Farbenflüssigkeiten (3) enthalten sind, unterschieden nach Farbe, wobei jede Art ihre eigene Filtergröße hat, erkennbar an der Farbe des Filtereinsatzes für Farbenflüssigkeiten (1), mit darauf mindestens einer Farbcodierung.

19. Halter mit einem Filtereinsatz für Farbenflüssigkeiten (1) nach einem der Ansprüche 1 - 9.

20. Träger mit einem Filtereinsatz für Farbenflüssigkeiten nach einem der Ansprüche 1-9.

## Revendications

1. Tamis pour peinture (1), muni d'une paroi sous forme de film (2) et d'une partie tamis (3), dans lequel la paroi sous forme de film (2) et la partie tamis (3) sont fabriquées à partir de plastique, dans lequel la paroi sous forme de film (2) et la partie tamis (3) sont fabriquées à partir d'un plastique soudable, dans lequel la paroi sous forme de film (2) a au moins deux lignes de pliage et / ou lignes de scellement (4), situées à l'opposé l'une de l'autre, de sorte que ladite paroi (2) a deux parties de paroi (2A, 2B) qui sont plates en position de stockage et la paroi sous forme de film (2) est légèrement tronconique à l'état déployé, dans lequel la partie tamis (3) forme le haut.

2. Tamis pour peinture (1) selon la revendication 1, dans lequel la partie tamis (3) est sensiblement en forme de cône à l'état déployé.

3. Tamis pour peinture (1) selon la revendication 1, dans lequel le plastique soudable est un plastique soudable thermoscellable, soudable à haute fréquence ou aux ultrasons.

4. Tamis pour peinture (1) selon l'une quelconque des revendications précédentes, dans lequel la paroi sous forme de film (2) est fermée sur elle-même et a un côté supérieur et un côté inférieur ouverts, dans lequel la partie tamis (3) a été fixée dans ledit côté inférieur.

5. Tamis pour peinture (1) selon l'une quelconque des revendications précédentes, dans lequel la paroi sous forme de film (2) est munie, à distance de la partie tamis (3), de moyens de suspension du tamis pour peinture (1).

6. Tamis pour peinture (1) selon l'une quelconque des revendications précédentes, dans lequel la partie tamis (3) s'étend d'un bord inférieur de la paroi (2) dans la direction d'un haut, dans lequel l'intégralité de la surface de la partie tamis (3) est munie de pores ouverts, dans lequel la paroi (2) ne s'étend pas dans ou sur la partie tamis (3).

7. Tamis pour peinture (1) selon l'une quelconque des revendications précédentes, dans lequel la paroi (2) est fabriquée à partir de PP, PE, PET ou de PA et la partie tamis (3) est fabriquée à partir de PP, PE, PET ou de PA, dans lequel la paroi (2) est fabriquée de préférence à partir de PP et la partie tamis (3) est fabriquée à partir de PA.

8. Tamis pour peinture (1) selon l'une quelconque des revendications précédentes, dans lequel le tamis pour peinture (1) est constitué de deux parties qui sont fixées l'une contre l'autre le long de deux parties de bord longitudinales (22), dans lequel chaque partie comprend une partie de paroi (2A, 2B) et une partie tamis (3), dans lequel lesdites parties sont de préférence formées de manière identique.

9. Tamis pour peinture (1) selon l'une quelconque des revendications précédentes, dans lequel le tamis pour peinture (3) est, à l'état opérationnel, au moins partiellement conique, en particulier de forme conique, avec un haut arrondi, formé par la partie tamis (3).

10. Procédé de fabrication d'un tamis pour peinture (1) selon l'une quelconque des revendications 1 à 9, dans lequel le tamis pour peinture (1) est au moins sensiblement constitué à partir d'une paroi sous forme de film (2) et d'une partie tamis (3), dans lequel ladite paroi sous forme de film (2) et ladite partie tamis (3) sont fabriquées à partir de plastique, dans lequel les tamis pour peinture (1) sont fabriqués dans le cadre d'un processus continu, dans lequel des bandes en mouvement de matériau de film plastique et de matériau formant la partie tamis sont interconnectées par scellement et sont divisées en tamis pour peinture (1), séparés par matriçage.

11. Procédé selon la revendication 10, dans lequel le tamis pour peinture est relié à la partie de paroi sous forme de film par scellement.

12. Procédé selon l'une quelconque des revendications 10 à 11 dans lequel une feuille sous forme de film (13) est munie d'une ouverture (14), dans lequel une partie tamis (3) est fixée dans ladite ouverture (14), en particulier sur les bords longitudinaux de celle-ci.

13. Procédé selon la revendication 12, dans lequel la feuille sous forme de film (13) est pliée, de sorte que la partie tamis (3) est aussi pliée, dans lequel une ligne de scellement (4) est prévue au-dessus de la partie tamis (3) et de la partie film, dans lequel ou après lequel ladite partie tamis (3) et ladite feuille sous forme de film (13) sont coupées, au-dessus ou le long de ladite ligne de scellement (4), pour obtenir au moins deux tamis pour peinture (1).

14. Procédé selon la revendication 12 ou 13, dans lequel une feuille sous forme de film (13) sensiblement rectangulaire est utilisée, dans laquelle ladite ouverture (14) est prévue, dans laquelle la partie tamis (13) est fixée, depuis laquelle sont formés au moins deux tamis pour peinture (1) de forme sensiblement identique, qui sont sensiblement carrés ou triangulaire à l'état plat, plié.

15. Procédé selon l'une quelconque des revendications 10 à 12, dans lequel, sur une première bande de film, destinée à former les premières parties de paroi (2A), une bande de plastique perforé est fixée, sur ou près d'un bord longitudinal de celle-ci, destinée à former une première partie de tamis (3A), dans lequel, sur une seconde bande de film, destinée à former des secondes parties de paroi (2B), une bande de plastique perforé est fixée sur ou près d'un bord longitudinal de celle-ci, destinée à former une seconde partie de tamis (3B), dans lequel la première et seconde bande (23) sont posées au sommet l'une de l'autre, de sorte que chaque première partie de paroi (2A) repose sur une seconde partie de paroi (2B) et chaque première partie de tamis (3A) sur une seconde partie de tamis (3B), après lequel au moins la première et la seconde partie de tamis (3A, 3B) sont reliées l'une à l'autre de manière étanche aux fluides le long d'un bord longitudinal, dans lequel deux première et seconde parties de paroi (2A, 2B) sont formées de préférence, chaque fois, respectivement, à proximité l'une de l'autre, sur lesquelles ladite bande a été fixée, dans lequel, après l'interconnexion des parties de tamis (3A, 3B), une opération de découpage ou de matriçage est effectuée, des tamis pour peinture (1) individuels étant découpés.

16. Procédé selon l'une quelconque des revendications 10 à 15, dans lequel la ou chaque ligne de scellement (7) est pliée vers l'intérieur du tamis pour peinture (1).

17. Procédé selon l'une quelconque des revendications 10 à 16, dans lequel un matériau formant gaze non tissée est utilisé pour la partie tamis (1).

18. Série de tamis pour peinture (1) selon l'une quelconque des revendications 1 à 9, dans laquelle au moins deux types de tamis pour peinture (3) sont inclus, différenciés par couleur, dans laquelle chacun desdits types a sa propre taille de tamis, identifiée par la couleur dudit tamis pour peinture (1), au moins un codage de couleur sur celui-ci.

19. Support avec tamis pour peinture (1) selon l'une quelconque des revendications 1 à 9.

20. Soutien avec tamis pour peinture selon l'une quelconque des revendications 1 à 9.
